# EUROPEAN PATENT APPLICATION

(11) **EP 4 751 571 A1**
(43) Date of publication of application: **03.06.2026**
(21) Application number: 25219482.4
(22) Date of filing: 28.11.2025
(51) Int. Cl.: A21B 1/28, F24B 1/20, F24C 9/00

(54) **COOKING LINE AND OVEN FOR COOKING FOOD PRODUCTS AND CORRESPONDING OPERATING METHOOD**

(30) Priority: 29.11.2024 IT 202400027099
(71) Applicant: CLM Bakery System S.r.l., 33080 Fiume Veneto (PN) (IT)
(72) Inventor: Roncadin, Francesco, 33080 Fiume Veneto (PN) (IT)
(74) Representative: Petraz, Gilberto Luigi

(57) **Abstract**

The present invention concerns an oven (10) for cooking food products (P) comprising an external casing (11) having internally a cooking chamber (12) delimited by lateral walls (13, 14), by an upper wall (15) and by a bottom wall (16) and presenting a frontal entry (17) and a rear exit (18) aperture. The oven (10) is also equipped with one or more burners (300, 400).

## Description

### FIELD OF THE INVENTION

The present invention concerns an oven for cooking food products and a corresponding operating method.

The present invention can be used, advantageously but not exclusively, for the industrial cooking of baked products such as bread, pizza, focaccia, panettone and suchlike. The invention also concerns an industrial line comprising one or more ovens for cooking food products.

### BACKGROUND OF THE INVENTION

Industrial ovens in which food products are cooked, such as in particular bread, focaccia, panettone or even pizzas and suchlike, have long been known. In particular, known ovens have a cooking tunnel inside which the aforementioned food products to be cooked are moved.

A cooking chamber in which the food products are disposed and moved, and at least one combustion chamber in which a comburant is combusted are delimited in the cooking tunnel, the combustion generating the heat to cook the food products.

Typically, known ovens have, within the tunnel, a plurality of lateral combustion chambers, therefore located on the sides of the tunnel and externally to the cooking chamber, and a plurality of lower combustion chambers, located below the tunnel. A heat generating source is provided in the combustion chambers, usually in the form of a gas burner, wood burner or suchlike.

Over time, ovens have been modified in order to optimize the transmission of heat inside them, thus improving energy consumption. There are still, however, some disadvantages.

In particular, known ovens, in the gas variant, are not eco-sustainable. In addition, energy consumption can be improved further.

EP-A1-4364573 discloses a cooking oven and a corresponding cooking line, the oven being equipped with one or more combustion chambers located below the cooking chamber. However, this oven does not fully meet the needs of the industry.

FR-A1-2717567 discloses a cooking oven equipped with two cooking chambers, one located above the other. A combustion chamber is provided below the lower cooking chamber, having the same lateral sizes as the dual cooking chamber. This combustion chamber is equipped with gas burners that are provided as auxiliary heating means, the main ones burning wood that is located directly in one or both cooking chambers.

DE-A1-102008012663 discloses a cooking oven equipped with three cooking chambers located one above the other, and two lateral combustion chambers fluidically connected to two of the three cooking chambers, the third serving to pre-cook the food products. The combustion chambers are connected to the two cooking chambers by means of small diameter pipes.

There is therefore the need to perfect a cooking line and oven for cooking food products, as well as a corresponding method for cooking food products, that can overcome at least one of the disadvantages of the state of the art.

To do this, it is necessary to solve the technical problem of making the line, oven, and method for cooking food products more eco-sustainable.

In particular, one purpose of the present invention is to provide a line, an oven, and perfect a method for cooking food products using only an eco-sustainable heat generating source.

Another purpose of the present invention is to provide a line, an oven, and to perfect a method for cooking food products that have an improved energy consumption compared to prior art ovens.

A further purpose of the present invention is to provide a line and an oven for cooking food products that are modular, easy, and quick to modify and adapt according to requirements.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the technical problem described above in a new and original way, also achieving considerable advantages compared to the state of the prior art, an oven according to the present invention for cooking food products comprises an external casing having internally a cooking chamber delimited by lateral walls, by an upper wall and by a bottom wall, and having a frontal entry aperture and an exit aperture. Preferably, there are also provided means for feeding the food products into the cooking chamber.

In accordance with one aspect of the present invention, the oven comprises at least one burner equipped with a combustion chamber for burning at least one fuel, located externally to the cooking chamber and fluidically connected thereto, the at least one burner being configured to burn biomass-based fuels. In particular, the at least one fuel is wood, preferably in the form of wood pellets. In particular, the combustion chamber of the at least one burner is located externally to the cooking chamber. The oven comprises at least two lateral fumes transit chambers, placed on the sides of the cooking chamber. With each fumes transit chamber there is connected at least one corresponding burner, with its own combustion chamber fluidically connected to the fumes transit chamber. The oven comprises, in the cooking chamber, two lateral bulkheads located longitudinally to the lateral walls, at least one passage aperture suitable to fluidically connect each lateral fumes transit chamber to the cooking chamber and located at a higher height than a flame axis of the burners, and also suction means located inside the cooking chamber and at a lower height than a rest plane of the food products while they are cooked. The rest plane of the food products while they are cooked can be the feed means, for example in the form of plates.

Doing so achieves at least the advantage of having an oven whose fuel is eco-sustainable. In addition, the fact of providing the comburent in the form of pellets allows to obtain a more efficient combustion that generates less residues. The latter are finer ash than non-pelleted comburents, which is advantageous for collection in the combustion chamber.

In accordance with some embodiments of the present invention, the oven also comprises at least one lower fumes transit chamber to which there is connected at least one corresponding burner with its own combustion chamber fluidically connected to the same lower fumes transit chamber. Preferably, in the lower fumes transit chamber, the oven comprises at least one deflector member for each burner, so as to distribute the fumes at exit from the burner, and therefore the heat emitted, homogeneously and over a larger area.

Advantageously, the lower fumes transit chamber is disposed transversely to the cooking chamber. In particular, the lower fumes transit chamber has a lateral size, that is, taken transversely to a direction of feed of the feed means, substantially equal to the width of the feed means themselves. This maximizes the heat transmitted to the feed means, which are advantageously made of heat-conducting material, such as lava stone for example.

Preferably, the at least one deflector member comprises a first deflector member and a second deflector member, disposed downstream of each other with respect to the path of the heat at exit from each burner. More preferably, the first and second deflector members are disposed perpendicular to each other, for each burner. For example, the first deflector member can be V-shaped, with the fold oriented vertically and located toward the combustion chamber of the corresponding burner. The second deflector member can be located above the first deflector member. The second deflector member can comprise a plurality of strips located longitudinally to the direction of delivery of the fumes, parallel to each other and spaced apart from each other to form slits. Advantageously, the slits have different widths to each other. For example, the width of each slit can grow as one moves away from the central strip.

In accordance with some embodiments of the present invention, advantageously, the internal surface of the lateral and upper walls of the cooking chamber is covered with lava stone, preferably Etnean, for example in the form of panels. The lower wall can be covered and/or made of lava stone, refractory concrete or sheet metal of ferrous material provided with adequate thermal insulation.

According to some embodiments, the two lateral bulkheads are located parallel to the lateral walls of the external casing and spaced apart therefrom, so as to delimit two lateral hollow spaces in the cooking chamber, fluidically connected to the at least one combustion chamber. The at least one passage aperture is defined by the space between the upper edge of the lateral bulkheads and the upper wall of the external casing.

In an alternative variant, the two bulkheads are each located against a respective lateral wall of the external casing. In this case, the at least one passage aperture is created in the lateral wall of the external casing and located above each internal lateral bulkhead. The at least one passage aperture can be a slit.

Preferably, the two internal lateral bulkheads are also made of lava stone.

Compared to known refractory materials, lava stone, with equal function, requires a lower mass density and is therefore lighter. This results in the internal structure of the cooking chamber having a much lower mass, and therefore requiring less energy consumption to bring it to temperature for cooking the food products. In addition, by saving in the mass density of refractory, part of the spaces saved can be filled with insulating material, improving the system's energy efficiency.

In accordance with some embodiments of the present invention, the at least two lateral fumes transit chambers are externally attached to the external casing of the oven. Advantageously, they are removable, simplifying any maintenance and/or replacement activities. Alternatively, it can also be provided that the at least two lateral fumes transit chambers are integral with the external casing of the oven, and/or that they are not removable.

According to some embodiments of the invention, the at least two lateral fumes transit chambers open onto the cooking chamber. That is, the aperture that fluidically connects them to the cooking chamber has substantially the same lateral sizes as the corresponding lateral fumes transit chamber. This optimizes the transfer of heat toward the cooking chamber.

In accordance with some embodiments of the invention, in each lateral fumes transit chamber, the burner is oriented in a direction inclined with respect to a direction of feed of the food products and its perpendicular. Favorably, the burner is oriented horizontally. It can also be provided that the burners of the lateral fumes transit chambers are oriented orthogonally to the direction of feed of the food products, which corresponds to the direction of feed of the feed means.

According to some embodiments, the at least one lower fumes transit chamber is fluidically connected to the lateral hollow spaces inside the cooking chamber. This allows to channel the excess heat of the at least one heat generating source of the at least one lower combustion chamber toward the lateral hollow spaces, and mix it with the heat coming from the at least one lateral combustion chamber before reaching the cooking chamber, to the advantage of a considerable recovery of heat that would otherwise be lost. The fluidic connection can be realized by providing one or more through apertures in each of the two internal lateral bulkheads, preferably disposed in a lower part thereof, for example in correspondence with their lower ends.

According to some embodiments, the at least one lateral fumes transit chamber and/or the lower fumes transit chamber is provided with an aperture for manual ash suction or for connection to an automatic and programmable centralized suction system. Preferably, the discharge aperture is made in a lateral wall of the fumes transit chamber, more preferably in a lower part thereof.

In accordance with some embodiments, the oven is equipped with an automatic and programmable ash suction system, configured to draw the ash resulting from the combustion of the heat generating source, in correspondence with the at least one fumes transit chamber. This aspect is more efficient when the heat generating source is in the form of pellets, which generate finer and therefore more easily suctionable ash.

The present invention also concerns an industrial line for cooking food products, consisting of one or more ovens as disclosed above. In particular, the ovens are located in succession so as to create a single cooking chamber.

According to another aspect of the invention, the industrial cooking line can also comprise, in addition to the one or more ovens as disclosed above, an oven equipped with a cooking chamber and an evaporation chamber, wherein the evaporation chamber comprises a steam emission device provided with a manifold. The manifold is installed outside the cooking chamber.

In accordance with the above purposes and to solve the technical problem described above in a new and original way, also achieving considerable advantages compared to the state of the prior art, a method according to the present invention for cooking food products, in particular by means of an oven as disclosed above, provides to generate combustion fumes by means of the at least two burners located in the at least two lateral fumes transit chambers with at least one biomass-based fuel, advantageously in the form of pellets, for example wood pellets; move food products to be cooked inside the cooking chamber; and cook, by means of the combustion fumes, the food products moved inside the cooking chamber. During cooking, it is also provided to draw the air into the cooking chamber by means of the suction means so that the fumes coming from the burners rise up to the at least one passage aperture and then descend into the cooking chamber due to the suction of the air.

Advantageously, due to the positioning of the suction means, the fumes drop below the food products to be cooked. This causes the food products to be enveloped by the fumes, and therefore the heat, which leads to a better and more homogeneous cooking of the food products.

### DESCRIPTION OF THE DRAWINGS

These and other aspects, characteristics and advantages of the present invention will become apparent from the following description of an embodiments, given as a non-restrictive example with reference to the attached drawings wherein:
- fig. 1 is a perspective view of an oven for cooking food products, according to the present invention;
- fig. 2 is a front view of the oven of fig. 1;
- fig. 3 is a front section view of a central part of the oven of fig. 1;
- fig. 4 is a plan view of a lower fumes transit chamber of the oven of fig. 1;
- fig. 5 is a lateral section view of the fumes transit chamber of fig. 4 with a corresponding burner;
- figs. 6 and 7 are plan and front views, respectively, both in section, of a lateral fumes transit chamber of the oven of fig. 1;
- fig. 8 is a lateral section view of a variant of the oven according to the present invention; and
- fig. 9 is a front view of the variant of the oven of fig. 8.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF AN EMBODIMENT OF THE PRESENT INVENTION

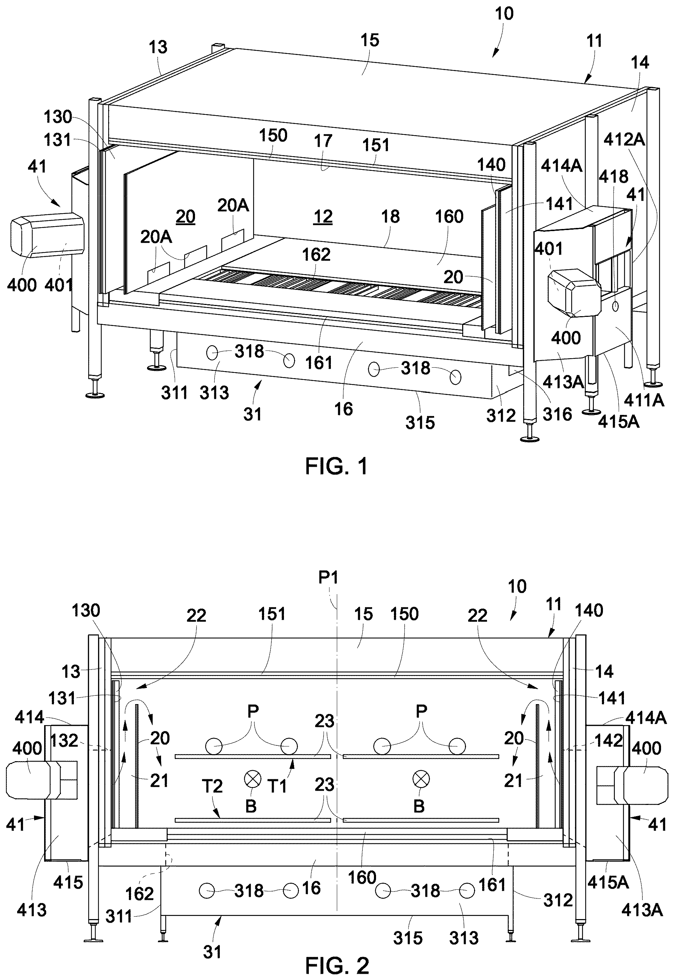

With reference to fig. 1, an oven 10 for cooking food products P according to the present invention is of an industrial type and comprises an external casing 11 having internally a cooking chamber 12 delimited by lateral walls 13, 14, by an upper wall 15 and by a bottom wall 16. The cooking chamber 12 has a frontal aperture 17, for example provided for the entry of the food products P to be cooked, and an opposite rear aperture 18 that can be provided for the exit of the food products P.

The oven 10 is provided with a plurality of burners 300, 400 each equipped with a respective combustion chamber 301, 401 and configured to operate the combustion of a biomass-based fuel. In the example described here, the fuel is wood pellets, but other types of biomass-based fuels are possible.

The oven 10 shown here is a module that, possibly assembled to other modules, can form an oven with a length adaptable according to requirements, including the productivity of the oven and the space in which to install the oven. Other modules are assembled to the oven 10 at its rear aperture 18. The width of the oven is customizable based on requirements and available spaces.

The lateral 13, 14 and upper 15 walls of the cooking chamber 12 are inwardly covered with insulating material and, as a last layer toward the cooking chamber, with refractory material, in particular lava stone or lava basalt, preferably Etnean. The lava stone cladding of these walls is realized in the form of panels, more precisely one or more lateral panels 130, 140 and one or more upper panels 150. Similarly, the cladding of insulating material is provided in the form of one or more lateral panels 131, 141 and one or more upper panels 151, each located between the corresponding wall 13, 14, 15 and the corresponding panel 130, 140, 150 made of lava stone (figs. 1 and 2). The bottom wall 16 is covered with insulating material and, in the innermost layer toward the cooking chamber, with refractory concrete and/or lava stone, so as to obtain a supporting layer for the members carrying the products to be cooked.

Two lateral bulkheads 20 are provided inside the cooking chamber, also made of refractory material, in particular lava stone, preferably Etnean. The two lateral bulkheads 20, in the present example, each consist of a lava stone panel. They are disposed parallel to, and in proximity to, the lateral walls 13, 14, so as to delimit respective lateral hollow spaces 21.

Each lateral bulkhead 20 comprises, in correspondence with its lower edge, three through apertures 20A, the function of which will be explained below. Obviously, the number of apertures 20A can vary depending on requirements, as well as their shape and sizes, as long as they allow a correct passage of air and heat.

In the example shown, the lateral bulkheads 20 are disposed symmetrically with respect to a vertical centerline plane P1 of the cooking chamber 12. The width of the hollow spaces 21 is equal to approximately 5% of the total width of the cooking chamber 12, this value being modifiable according to requirements.

Each lateral bulkhead 20 has a length substantially equal to the length of the cooking chamber 12 (understood as the minimum distance between the frontal aperture 17 and the rear aperture 18) and a height smaller than the height of the cooking chamber 12, so as to leave a passage aperture 22 between the upper edge of the lateral bulkhead 20 and the upper wall 15 (fig. 2).

In an alternative variant, the lateral bulkheads 20 are located against the lateral walls 13, 14 and do not define the hollow spaces 21 as above. In this variant, the passage apertures 22 are created in the lateral walls 13, 14, above the lateral bulkheads 20. In this case, the passage apertures 22 can be, for example, slits.

Means for feeding the food products P are provided in the cooking chamber 12, for example of the type with separate plates 23 moved along a delivery segment T1 and a return segment T2 located below the delivery segment T1 (fig. 2). For simplicity, only the plates 23 are shown in the drawings. In a known manner, along the delivery segment T1 the plates 23 are displaced from the frontal entry aperture 17 toward the rear aperture 18, while in the return segment T2 the plates are displaced in the opposite direction. In addition, along the delivery segment T1 the plates 23 are loaded with at least one food product P to be cooked, while in the return segment T2 they are empty (fig. 2). The plates 23 are also made of Etnean lava stone.

The delivery segment T1 and the return segment T2 are parallel to the centerline plane P1, and therefore define a direction of feed D also parallel to the centerline plane P1.

To supply the heat necessary for cooking the food products P, the oven 10 comprises at least one fumes transit chamber 30, 40 to which at least one burner 300, 400 is connected. In the example shown, the oven 10 comprises a lower fumes transit chamber 30, located below the cooking chamber 12, and two lateral fumes transit chambers 40, located on the sides of the cooking chamber 12. Each of them comprises at least one burner 300, 400, as a heat generating source, configured to burn the fuel, which is biomass-based. In particular, the fuel is in the form of wood pellets.

The fumes transit chambers 30, 40 are located externally to the casing 11 and fluidically connected to the cooking chamber 12 through respective apertures 132, 142, 162 made in the lateral walls 13, 14 and in the bottom wall 16, as well as in the corresponding lava stone panels 130, 140, 160 and in the respective panels 131, 141, 161 of insulating material. More precisely, the fumes transit chambers 30, 40 are provided in respective casings 31, 41 that develop externally from the lateral walls 13, 14 and from the bottom wall 16 of the casing 11 (figs. 1 and 2).

The lower fumes transit chamber 30 develops downward from the external casing 11 and is oriented transversely to the cooking chamber 12, that is, parallel or longitudinally to the frontal and rear apertures 17, 18. The length of the lower fumes transit chamber 30 is such as to adequately cover the width of the product carrying plates 23.

The casing 31 consists of two lateral walls 311, 312, a frontal wall 313, a rear wall 314 and a bottom wall 315. A lateral through aperture 316 is also provided on at least one of the lateral walls to allow access into the lower fumes transit chamber 30, for example for cleaning or maintenance operations.

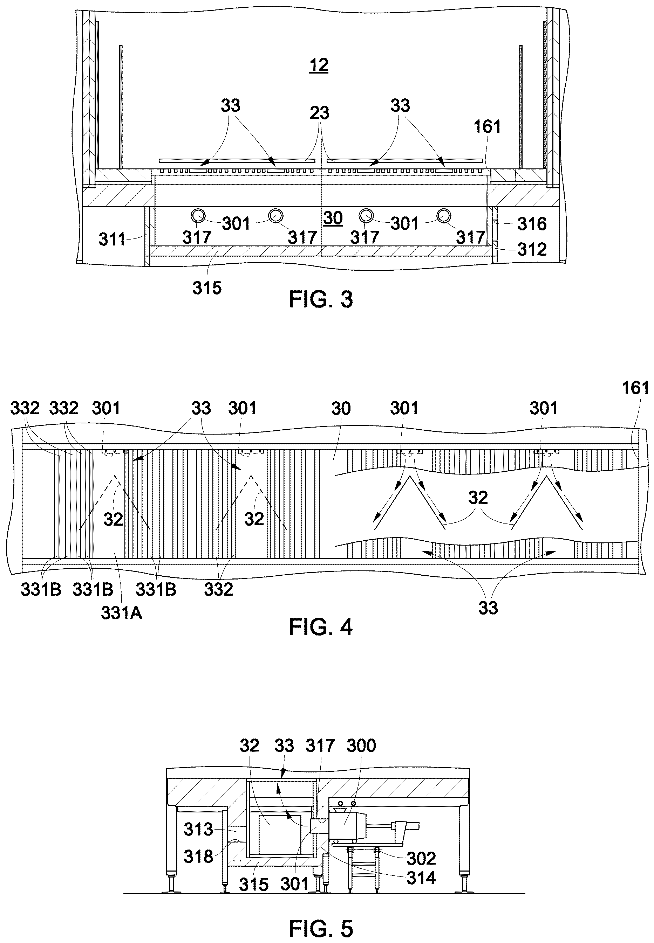

The lower fumes transit chamber 30 shown in fig. 3 is equipped with four burners 300 identical to each other, whose combustion chambers 301 are inserted inside the fumes transit chamber 30 through respective through apertures 317 made in the rear wall 314 (figs. 3, 4 and 5) and whose shape and sizes correspond to the shape and sizes of the combustion chambers 301, so as to have a same-shape coupling and keep the through apertures 317 closed. The number of burners 300 can vary depending on the width of the product carrying plates 23 and therefore of the oven. We must clarify that the combustion chambers 301 flow directly into the lower fumes transit chamber 30.

The burners 300 are removably installed, which facilitates their extraction for maintenance and cleaning or replacement operations, for example. As can be seen from fig. 5, in the example shown each burner 300 is resting on its own trolley 302, so as to facilitate its displacement.

Deflector members 32, 33 are provided in the lower fumes transit chamber 30, configured to homogeneously distribute the fumes, and therefore the heat, delivered by the burners 300. In particular, for each burner 300 there is provided a first deflector member 32 and a second deflector member 33, located in succession along a path followed by the respective fumes (figs. 1, 4 and 5).

The first deflector member 32 is configured to transversely expand the flow of fumes at exit from the burner 300, that is, from its combustion chamber 301. In the example shown, the deflector member 32 is formed by a V-shaped or V-bent sheet, with the bend oriented vertically and located in front of and toward the combustion chamber 301 of the corresponding burner 300 (fig. 4). The plate can be made of metal material, for example steel, or refractory material.

The second deflector member 33 is located above the first deflector member 32, that is, along the path followed by the fumes (and heat) at exit from the burner 300. The second deflector member 33 is configured to homogeneously distribute the heat in correspondence with the aperture 161 in the bottom wall 16 of the cooking chamber 12. The aim is to heat the product carrying plates 23 uniformly over their entire width, advantageously obtaining a uniform cooking of the products P on the various rows.

Every second deflector member 33 comprises a plurality of strips 331A, 331B located longitudinally to the direction of delivery of the fumes, and therefore to a central axis of the combustion chamber 301. The strips 331A, 331B are disposed parallel to and suitably spaced apart from each other to form a plurality of slits 332, which are also longitudinal to the direction of delivery of the fumes.

In the example shown, the strips 331A, 331B comprise a central strip 331A and ten secondary strips 331B positioned symmetrically with respect to the central strip 331A. The width of the central strip 331A is greater than that of the secondary strips 331B. The latter are disposed at a variable distance so as to create slits 332 of variable width on each side of the central strip 331A. In this example, the width of the slits 332 increases as one moves away from the central strip 331A. However, each slit has a rectangular shape. Obviously, the strips can be provided in a different number, with different sizes and with different spacings depending on requirements.

We must clarify that the strips are represented here as separate pieces, but it is also possible to provide that the second deflector 33 is made in a single piece, for example a sheet in which the slits 332 are made.

The second deflector 32 can be made of metal material, such as steel for example, or even of refractory material, such as Etnean lava stone or alternatives.

There are two lateral fumes transit chambers 40 on the sides of the cooking chamber 12, each on a respective side. It is possible to provide that there is only one lateral fumes transit chamber 40, or that there are none, as long as the lower fumes transit chamber 30 is present.

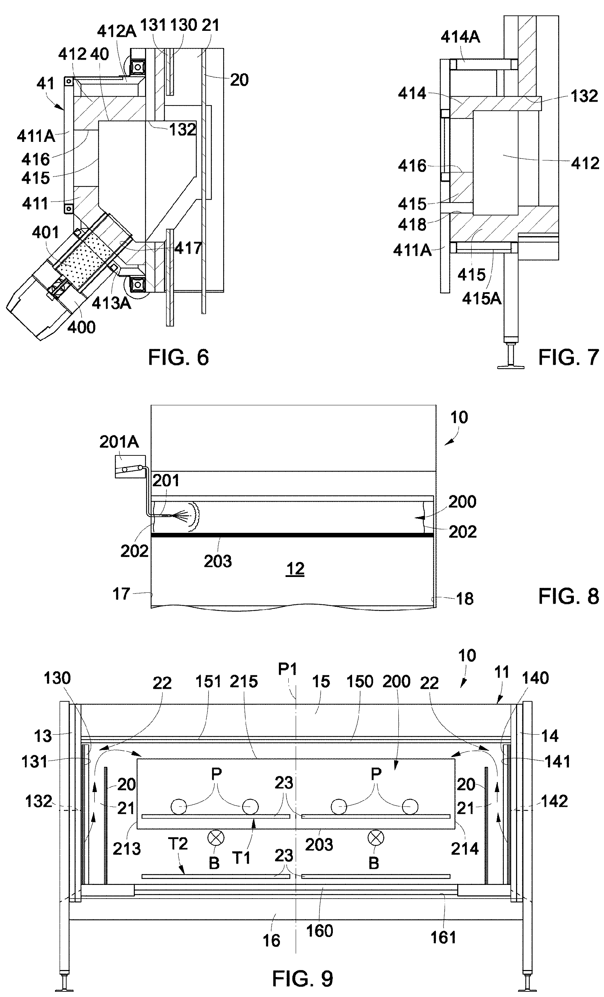

Each lateral fumes transit chamber 40 consists of a lateral wall 411, a rear wall 412 oriented toward the rear aperture 18 of the oven, and a frontal wall 413 oriented toward the frontal aperture 17 of the oven 10, as well as an upper wall 414 and a bottom wall 415 (figs. 6 and 7). Each of these walls is covered by a respective external panel 411A-415A, which participates in the attachment of the lateral fumes transit chamber 40 to the casing 11 of the oven 10, and/or which gives greater thermal insulation to the assembly thanks to the panels 131, 141, 161 of insulating material (figs. 1, 2, 6 and 7).

On the opposite side to the lateral wall 411, the casing 41 is open and configured to be associated with a corresponding lateral wall 13, 14 of the casing 11 of the oven 10, in particular in correspondence with the corresponding apertures 132, 142. For this purpose, the rear 412, frontal 413, upper 414 and bottom 415 walls have a shaped free edge suitable to connect by contact then sealed with the walls present in the casing 11 and which delimit the apertures 131, 141.

A through aperture 416 is provided in the lateral wall 411 to allow an operator to have access to the inside of the lateral fumes transit chamber 40, so as to facilitate cleaning and maintenance operations, for example. This through aperture 416 can be closed by means of a special closing element, not shown here.

An insertion aperture 417 is provided in the frontal wall 413, in which the burner 400 is removably attached, in particular by inserting the combustion chamber 401 (fig. 6) therein. It is advantageous for the shape and sizes of the insertion aperture 417 to correspond to those of the combustion chamber 401. It can be provided that the free end of the combustion chamber 401 is placed inside the lateral fumes transit chamber 40.

An aperture 418 is provided in the lateral wall 411 for connecting ash suction pipes. The aperture 418 is advantageously placed in the lateral wall 411, in particular below the through aperture 416. The aperture 418 is suitable to be stably connected to a fully automatic and programmable centralized suction system, or it can provide a convenient access point for operators who have to carry out periodic cleaning. The cleaning of the fumes transit chamber can also be carried out in depth by accessing the aperture 416. With regard to the lower fumes transit chamber 30, apertures 318 for engaging the ash suction pipes are on the frontal wall 313 and on axis with the burners 300 (figs. 1, 2 and 5).

In some embodiments, not shown here, it can be provided to feed the burners 300 and 400 with pellets semi-automatically, housing a pellet tank near the burner which has to be filled manually by operators; a screw feeder then picks up the pellets from this tank and feeds them to the burner based on requirements. Alternatively, a fully automatic feeding system can be provided where, with a series of pipes, the pellets are carried from a common point (silos, big bags, etc.) to the various burners installed on the oven.

In the example shown here, the burner 400 of each lateral fumes transit chamber 40 is oriented horizontally and in a direction inclined with respect to both the direction of feed of the food products P and also its perpendicular (figs. 1, 2 and 6). This allows to better distribute the heat when it enters the cooking chamber 12 laterally. The frontal wall 413 of the casing 41 is also inclined by an angle other than 90°, so as to mount the burner 400 perpendicularly thereto.

The oven 10 is also equipped with a fumes suction system equipped with suction ports B of a known type. Advantageously, the suction ports B are positioned at an intermediate height between the delivery segment T1 and the return segment T2 of the feed means of the food products P, in particular they are positioned at a height lower than the carrying plates 23 in the delivery segment T1, so that the heat exiting from the lateral combustion chambers 401 has an ascending path in correspondence with the lateral hollow spaces 21, passes through the passage apertures 22 above the lateral bulkheads, and is then directed downward once it has reached the cooking chamber 12 (fig. 2). This allows to make the most of the heat produced to heat the panels 130, 140, 150, the lava stone lateral walls 20 and the carrying plates 23, and thus obtain an intense and homogeneous heat in the cooking chamber so as to obtain a uniform cooking of the products.

We must clarify that the lower fumes transit chamber 30 has, as the only possibility for the heat to exit, the aperture 161 in the bottom wall 16, which flows directly into the cooking chamber 12. This causes the heat emitted from the lower combustion chambers 301 to directly heat the carrying plates 23. Any excess heat is conveyed into the hollow spaces 21 through the apertures 20A provided on the lower part of the lateral bulkheads 20. The excess heat, thus conveyed, is mixed with the heat coming from the lateral combustion chambers 401 and then evacuated through the same fumes suction system.

Fig. 8 shows a variant of the oven 10, in which an evaporation chamber 200 is provided positioned inside the cooking chamber 12. The oven 10 is therefore advantageously configured for the moist-heat cooking of the food products P. A production line with evaporation chamber consists of at least two ovens, one of which is provided with an evaporation chamber 200.

The evaporation chamber 200 comprises a steam emission device 201. Advantageously, the steam emission device 201 is provided with a manifold 201A installed outside the cooking chamber 12 and therefore in a cold zone. This feature improves the effectiveness of the steam emission device 201, as well as the evaporation chamber 200, and reduces steam consumption compared to known solutions. The evaporation chamber 200 can be a through chamber closable by means of separation elements 202, both at the frontal aperture 17 and also at the rear aperture 18, so as to be insulated from the combustion fumes and heated indirectly. A "through chamber" is understood as a box-shaped chamber, having two apertures, entry and exit, preferably one opposite the other.

The separation elements 202 can be a sliding door, a curtain made of heat-resistant material such as Teflon^{™}, combinations thereof or suchlike, openable for the passage of the food products P. At least one of the separation elements 202 is displaceable along the centerline plane P1 so as to make the length of the moist segment, that is, of the evaporation chamber 200, adjustable as desired.

The evaporation chamber 200 is delimited at the lower part by a separation wall 203 located between the delivery and return segments T1 and T2; at the upper part and laterally it can be delimited by respective lateral 213, 214 and upper 215 walls of the evaporation chamber 200, so as to create a hollow space between the walls 213, 214, 215 and the walls 20, 15 made of lava stone (fig. 9). Alternatively, it can be provided that the evaporation chamber 200 is delimited laterally and at the upper part by the lateral walls 20 and by the upper wall 15 of the cooking chamber 12.

The module with evaporation chamber does not have a lower fumes transit chamber or lateral chambers. Heat will be taken from the following modules. The sizes are such that the cooking chamber 12 can keep the previously described feed means.

The operation of the oven 10 described heretofore, which corresponds to the method according to the present invention, comprises the following steps.

First, the oven 10 is set up as described above.

The burners 300, 400 are then ignited to operate the combustion of the wood pellets and thus generate fumes and heat to cook the food products P inside the cooking chamber 12.

In the lower fumes transit chamber 30, the fumes exiting the combustion chamber 301 of each burner 300 are separated in two by the first deflector members 32. The fumes then rise toward the cooking chamber 12 and, the moment they pass through the aperture 161, are further distributed by the second deflector members 33 so as to heat the plates 23 uniformly across the entire width. The excess heat passes through the through apertures 20A and reaches the hollow spaces 21, and then follows the fumes coming from the lateral combustion chambers 401, as described below.

The fumes coming from the lateral combustion chambers 401, on the other hand, pass through the fumes transit chambers 40 without being diverted and then, through the apertures 131, 141, hit the hollow spaces 21 and rise along them until they reach the passage aperture 22 above the lateral bulkheads 20. Passing through the cooking chamber 12, they once again descend toward the bottom wall 16, due to the suction created by the suction system and its suction ports located between the delivery T1 and return T2 segments of the plates 23 in the cooking chamber 12.

This path of the fumes allows the lateral bulkheads 20 and the lava stone panels 130, 140, 150 that cover the walls of the cooking chamber 12 to be heated efficiently and quickly.

Then the food products P are placed on respective plates 23 which are inserted into the cooking chamber 12 and moved by means of the movement means.

It is clear that modifications and/or additions of parts may be made to the oven 10 and to the method as described heretofore, without thereby departing from the field and scope of the present invention, as defined by the claims.

It is also clear that, although the present invention has been described with reference to some specific examples, a person of skill in the art will be able to achieve other equivalent forms of line and oven for cooking food products and corresponding operating method, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Oven (10) for cooking food products (P) comprising an external casing (11) having internally a cooking chamber (12) delimited by lateral walls (13, 14), by an upper wall (15) and by a bottom wall (16), having a frontal entry aperture (17) and an opposite rear aperture (18), comprising at least one burner (300, 400) equipped with a respective combustion chamber (301, 401) for burning at least one fuel, located externally to said cooking chamber (12) and fluidically connected thereto, and configured to burn biomass-based fuels, preferably wood pellets, **characterized in that** it comprises at least two lateral fumes transit chambers (40) placed on the sides of said cooking chamber (12), wherein with each fumes transit chamber (40) there is connected at least one corresponding burner (400) with its own combustion chamber (401) fluidically connected to said fumes transit chamber (40), **and in that** it comprises, in said cooking chamber (12), two lateral bulkheads (20) located longitudinally to said lateral walls (13, 14), at least one passage aperture (22) suitable to fluidically connect each of said lateral fumes transit chambers (40) to said cooking chamber (12) and located at a higher height than a flame axis of said burners (40), and suction means (B) located inside said cooking chamber (12) and at a lower height than a rest plane of said food products (P) while they are cooked.

2. Oven (10) as in claim 1, **characterized in that** it also comprises at least one lower fumes transit chamber (30) to which there is connected at least one corresponding burner (300) with its own combustion chamber (301) fluidically connected to said lower fumes transit chamber (30).

3. Oven (10) as in claim 2, **characterized in that** it comprises, in said lower fumes transit chamber (30), at least one deflector member (32, 33) for each burner (300), configured to distribute the fumes at exit from said burner (300) in a homogeneous manner in said cooking chamber (12).

4. Oven (10) as in claim 2 or 3, **characterized in that** the lower fumes transit chamber (30) is disposed transversely to the cooking chamber (12).

5. Oven (10) as in any claim from 2 to 4, **characterized in that** the lower fumes transit chamber (30) has a lateral size equal to the width of feed means (23) suitable to support said food products (P).

6. Oven (10) as in any claim from 2 to 5, **characterized in that** the lower fumes transit chamber (30) is centered transversely with respect to the cooking chamber (12).

7. Oven (10) as in any claim from 3 to 6, **characterized in that** the at least one deflector member (32, 33) comprises a first deflector member (32) and a second deflector member (33) disposed downstream of each other with respect to the path of the heat at exit from each burner (300).

8. Oven (10) as in claim 7, **characterized in that** the first (32) and the second deflector member (33) are disposed perpendicular to each other.

9. Oven (10) as in any claim hereinbefore, **characterized in that** the internal surface of said lateral walls (13, 14) and of said upper wall (15) is covered with lava stone.

10. Oven (10) as in any claim hereinbefore, **characterized in that** said two lateral bulkheads (20) are located parallel to said lateral walls (13, 14) and spaced apart therefrom, so as to delimit two lateral hollow spaces (21) fluidically connected to at least one lateral combustion chamber (401).

11. Oven (10) as in any claim from 1 to 9, **characterized in that** said two lateral bulkheads (20) are located in contact with said lateral walls (13, 14), said passage apertures being created in the lateral walls of the cooking chamber (12) and located above said lateral bulkheads (20).

12. Oven (10) as in any claim hereinbefore, **characterized in that** said lateral bulkheads (20) are made of lava stone.

13. Oven (10) as in claim 10, **characterized in that** said at least one lower fumes transit chamber (30) is fluidically connected to said lateral hollow spaces (21).

14. Oven (10) as in any claim from 2 or 13, **characterized in that** said at least two lateral fumes transit chambers (40) and said lower fumes transit chamber (30) are equipped with an aperture (318, 418) for manual ash suction or for connection to an automatic and programmable centralized suction system.

15. Industrial cooking line, comprising one or more ovens (10) as in any claim hereinbefore.

16. Industrial cooking line as in claim 15, **characterized in that** it also comprises an oven equipped with a cooking chamber (12) and an evaporation chamber (200), comprising a steam emission device (201) equipped with a manifold (201A) installed outside said cooking chamber (12).

17. Method for cooking food products (P) by means of an oven (10) as in any claim from 1 to 14 or by means of an industrial cooking line as in claim 15 or 16, comprising generating combustion fumes by means of said at least two burners (400) located in said at least two lateral fumes transit chambers (40) using at least one biomass-based fuel; moving food products (P) to be cooked inside said cooking chamber (12); cooking, by means of the fumes at exit from said at least one burner (300, 400), said food products (P), drawing the air into said cooking chamber (12) by means of said suction means (B) so that the fumes coming from said burners (400) rise up to said passage aperture (22) and then descend into said cooking chamber (12) by means of the air suction.
